Europäisches Patentamt

European Patent Office

Office européen des brevets

(19)

(11) Numéro de publication: **0 127 517
B1**

(12) **FASCICULE DE BREVET EUROPEEN**

(45) Date de publication du fascicule du brevet:
**03.08.88**

(21) Numéro de dépôt: **84400989.4**

(22) Date de dépôt: **15.05.84**

(51) Int. Cl.⁴: **H 04 Q 3/62,** H 04 Q 3/00

(54) Circuit de ligne pour joncteur de réseau.

(30) Priorité: **18.05.83 FR 8308186**

(43) Date de publication de la demande:
**05.12.84 Bulletin 84/49**

(45) Mention de la délivrance du brevet:
**03.08.88 Bulletin 88/31**

(84) Etats contractants désignés:
**BE DE GB IT NL**

(56) Documents cités:
**EP - A - 0 010 720
DE - A - 2 556 157
FR - A - 2 251 975
FR - A - 2 254 168
FR - A - 2 326 100**

(73) Titulaire: **SOCIETE ANONYME DE
TELECOMMUNICATIONS (S.A.T.), 40 avenue de New
York, F-75116 Paris (FR)**

(72) Inventeur: **Bailly, François Pierre, 41, rue Cantagrel,
F-75631 Paris Cédex 13 (FR)**
Inventeur: **Bourgoin, Alain, 41, rue Cantagrel,
F-75631 Paris Cédex 13 (FR)**
Inventeur: **Israel, Renato, 41, rue Cantagrel,
F-75631 Paris Cédex 13 (FR)**

(74) Mandataire: **Bloch, Robert et al, Cabinet BLOCH 6, rue
du Faubourg Saint-Honoré, F-75008 Paris (FR)**

**Description**

La présente invention concerne un circuit de ligne pour joncteur de réseau comportant des moyens interrupteurs de boucle permettant notamment la numérotation, des moyens de régulation présentant une impédance élevée pour les fréquences téléphoniques et une impédance faible pour les courants de sonnerie, et comprenant deux transistors montés en Darlington, le premier transistor étant placé en série avec une résistance, et des moyens sont prévus pour stabiliser la tension de la base dudit second transistor afin de relever l'impédance desdits moyens de régulation dans la bande téléphonique.

Un joncteur de ligne réseau est un dispositif destiné à raccorder toutes les lignes d'abonnés d'un même autocommutateur privé à un central téléphonique public au moyen d'une ligne réseau à deux fils. Un joncteur de ligne réseau assume de nombreuses fonctions telles que de transmettre la basse fréquence de la ligne PTT vers le réseau de connexion du central privé ou vers tout autre dispositif similaire (poste d'intercommunication par exemple) et, réciproquement, d'assurer une bonne réjection du mode commun, d'assurer un bon isolement galvanique de la ligne PTT par rapport à la terre, notamment.

Ces joncteurs de ligne réseau comportent, en particulier, un dispositif de détection de sonnerie, un dispositif de commande de l'état boucle, un dispositif de numérotation.

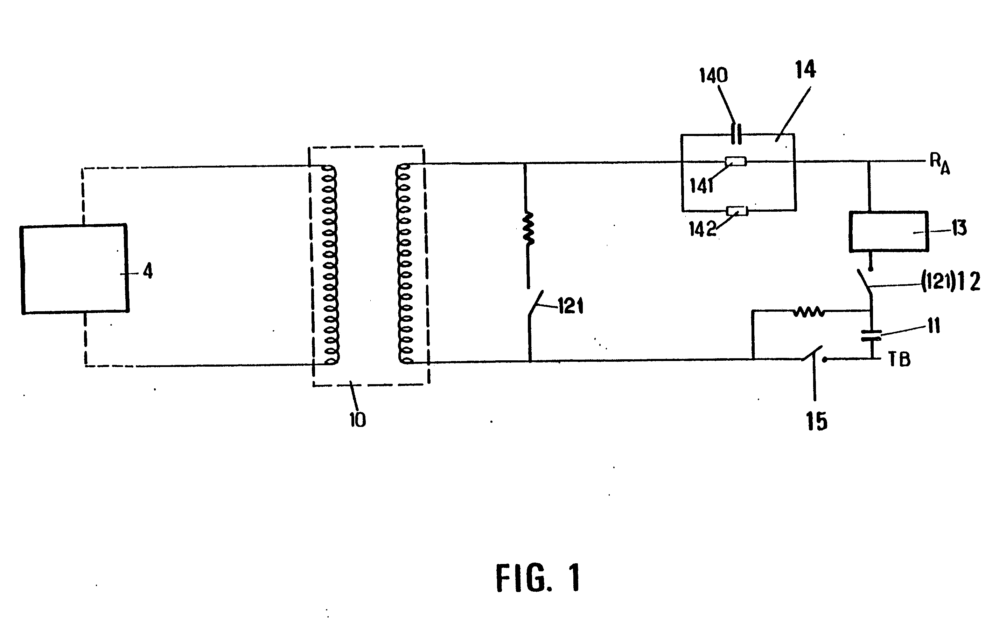

Les dispositifs de numérotation connus pour joncteur de ligne réseau comportent usuellement un relais électromécanique introduisant des ruptures de courant continu dans la boucle en nombre et à une fréquence appropriés, lesdites ruptures étant alors détectées au moyen d'un circuit électrique inséré côté central public. En se référant à la figure 1, un joncteur de ligne réseau de type classique de l'art antérieur comporte un translateur 10 recevant le courant d'alimentation du central public et transmettant la basse fréquence au central privé 4.

Entre les fils R$_A$ et T$_B$ de la ligne réseau, on dispose généralement un condensateur 11 en série avec un circuit de détection de sonnerie 13 raccordés par le contact repos 121 du relais 12. Le condensateur 11 permet de coupler le dispositif de courant d'appel au repos et de protéger le relais 15 de numérotation. La position travail du contact 121 court-circuite la self du translateur 10 pendant la numérotation.

Il était donc usuel, pour limiter le courant ligne réseau, d'insérer un circuit 14 à trois composants placés en parallèle: un condensateur 140, une résistance 142 et une thermistance 141. Cette dernière thermistance 141 pouvait être remplacée par un ensemble de résistances commutables par plots.

Toutefois, de tels dispositifs de numérotation ne donnent pas satisfaction du fait d'une mauvaise régulation de l'alimentation en courant continu. Les relais sont bien connus pour leurs défauts d'encombrements, de bruit, de coût, leur manque de fiabilité. Le translateur est également très encombrant car il doit supporter le courant continu.

On connaît également un circuit de ligne pour joncteur de réseau du type mentionné ci-dessus par le document FR-A-2 326 100. Toutefois, dans ce circuit les deux transistors de régulation, qui sont en fait montés en «faux Darlington», sont des transistors PNP qui, dans des conditions particulières, par exemple sous haute tension, en cas de foudre, de parasites ou de courants induits, ne sont pas assez robustes. En outre, dans le circuit de ce document les moyens de régulation du courant de boucle et les moyens de stabilisation, qui évitent le passage du courant basses fréquences dans la boucle, ne sont pas les mêmes, la régulation, en l'occurence, étant obtenue par une thermistance qui présente beaucoup d'inconvénients.

La présente invention vise donc à perfectionner un tel circuit.

A cet effet, la présente invention concerne un circuit de ligne pour joncteur de réseau comportant des moyens interrupteurs de boucle permettant notamment la numérotation, des moyens de régulation présentant une impédance élevée pour les fréquences téléphoniques et une impédance faible pour les courants de sonnerie, et comprenant deux transistors montés en Darlington, le premier transistor étant placé en série avec une première résistance dans ladite boucle, et des moyens sont prévus pour stabiliser la tension de la base dudit second transistor afin de relever l'impédance desdits moyens de régulation dans la bande téléphonique, caractérisé par le fait que lesdits moyens de régulation maintiennent le courant de ladite boucle autour d'un seuil prédéterminé, lesdits transistors de régulation sont du type NPN, ledit premier transistor reçoit sur sa base l'impulsion de commande d'ouverture ou de fermeture de boucle, lesdits moyens de stabilisation comprennent une deuxième résistance, connectée entre la base dudit second transistor, et le collecteur dudit premier transistor, et un condensateur connecté par sa première extrémité à la base dudit second transistor des moyens de commande de ladite régulation comprennent un troisième transistor dont la base est raccordée à l'émetteur dudit premier transistor, qui est connecté à la première extrémité de ladite première résistance, et dont le collecteur est connecté à la base dudit second transistor, l'émetteur du troisième transistor étant relié à la deuxième extrémité de ladite première résistance par l'intermédiaire d'une diode agencée pour améliorer la régulation pour les faibles tensions, la deuxième extrémité dudit condensateur étant connectée à la deuxième extrémité de ladite première résistance.

Entre la base dudit troisième transistor et l'émetteur dudit premier transistor, on interpose avantageusement un filtre passe-bas à grande constante de temps ce qui limite la régulation pour les courants de sonnerie.

De plus, entre la base dudit second transistor et ladite résistance, on dispose une diode Zéner afin de limiter les surtensions en boucle ouverte.

Le dispositif de l'invention peut supporter les conditions défectueuses susceptibles d'intervenir sur la ligne. Par exemple, des courants peuvent être induits par le réseau alternatif et des courants transitoires en haute tension (400 V). De plus, le joncteur de ligne réseau de l'invention présente, côté abonné, une impédance d'alimentation en courant de ligne élevée dans toute la bande de fréquence 300–3400 Hz utilisée pour les voies téléphoniques.

D'autres avantages et caractéristiques apparaîtront à la lecture de la description suivante de la forme de réalisation préférée du joncteur de l'invention, en référence aux dessins annexés, sur lesquels:

La figure 1 est une représentation d'un joncteur classique de l'art antérieur, et

La figure 2 représente la forme de réalisation préférée du joncteur de l'invention.

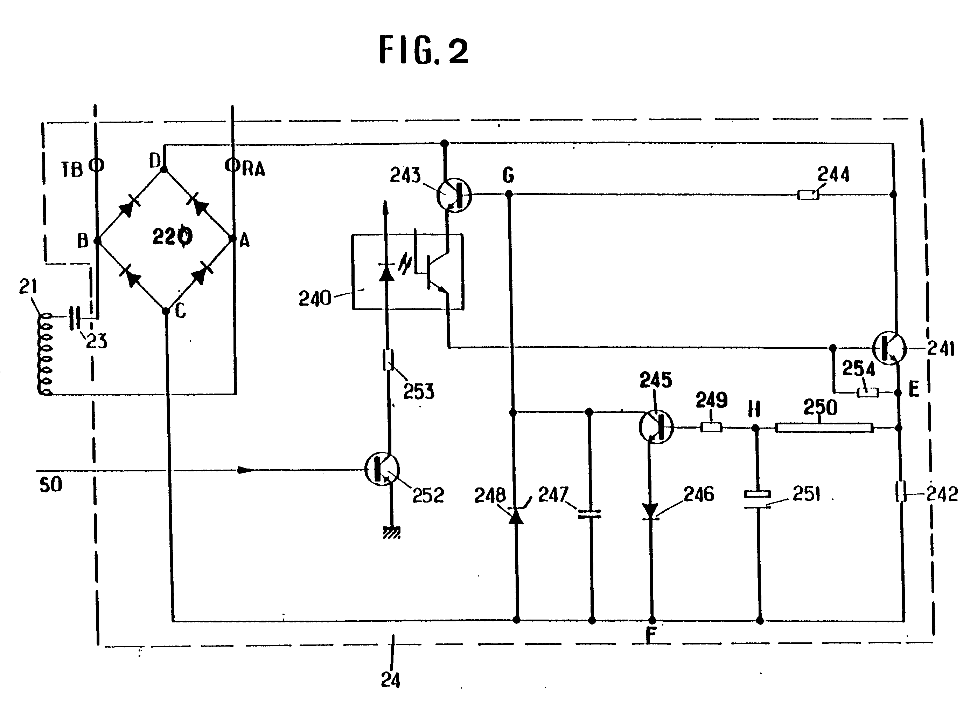

Sur la figure 2, un dispositif de numérotation 24 est inséré entre les fils $T_B$ et $R_A$ par l'intermédiaire d'un pont de diodes 220; ce pont permet d'avoir une polarité fixe aux bornes du régulateur quelle que soit la polarité de la ligne. Un translateur 21 assure la transformation deux fils-quatre fils.

Un condensateur 23 permet de protéger le translateur 21 du courant continu. Le dispositif 24 de numérotation comporte un photocoupleur 240 relié à la base d'un transistor 241. Le transistor 241 de type npn est relié à une résistance 242 par son émetteur en un point E tandis que son collecteur est relié au collecteur d'un autre transistor 243, formant ainsi un montage en Darlington.

L'émetteur du transistor 243 de type npn également est relié à l'autre borne du photocoupleur 240. La base du transistor 243 est reliée en un point G, d'une part, au collecteur du transistor 241 par l'intermédiaire d'une résistance 244, d'autre part, au collecteur d'un autre transistor 245 de type npn également.

L'émetteur du transistor 245 est raccordé à un point F par l'intermédiaire d'une diode 246. Cette diode 246 est passante de G vers F. Le point F est une borne de la résistance 242, autre que le point E. Entre la base du transistor 241 et son émetteur, on place une résistance 254.

Entre G et F on place, en parallèle sur le transistor 245 et la diode 246, d'une part, un condensateur 247 et, d'autre part, une diode Zéner 248. De plus, la base du transistor 245 est reliée au point E par l'intermédiaire de deux résistances 249 et 250 formant un circuit RC avec un condensateur 251. La borne H commune aux deux résistances 249 et 250 est raccordée au point F par l'intermédiaire du condensateur 251.

Le signal SO de commande d'ouverture et de fermeture de boucle est appliqué sur la base d'un transistor 252 de type pnp dont le collecteur est raccordé au photocoupleur 240 par l'intermédiaire d'une résistance 253.

Le courant de boucle est commandé par le signal SO qui fait passer un courant dans la photodiode du photocoupleur 240. Ce photocoupleur 240 applique un courant ou coupe le courant de base du transistor 241 correspondant à l'établissement ou à la coupure de la boucle pendant la numérotation sur la ligne. Le photocoupleur 240 peut être remplacé par tout moyen interrupteur équivalent.

Le transistor 241, la résistance 242 ainsi que le transistor 243 monté en Darlington avec le premier forment un régulateur de courant. Ainsi, à la fermeture de boucle, la tension aux bornes de la résistance 242 commande le transistor 245 qui lui-même commande le transistor 243. Le transistor 243 fournit le courant de base au transistor 241. Ainsi, si la tension aux bornes de la résistance 242 augmente, le transistor 245 va conduire plus et le transistor 243 va conduire moins, ce qui diminue le courant de base du transistor 241 entraînant une diminution du courant collecteur. La baisse du courant traversant le transistor 241 va faire baisser la tension aux bornes de la résistance 242. Ainsi, la régulation de courant réalisée par les trois transistors et la résistance, formant ce qu'on peut appeler une self électronique, permettant de conserver un courant de boucle voisin d'un seuil convenablement choisi.

Dans la pratique, on souhaite que le courant circulant en ligne soit compris entre 29 mA (par 7, 25 V aux bornes du joncteur) et 40 mA (par 36 V aux bornes du joncteur). On choisit une capacité pour le condensateur 247 de l'ordre de 0,68 µF afin de stabiliser la tension sur la base du transistor 243 ce qui relève l'impédance du régulateur ainsi formé dans la bande téléphonique. De plus, on choisit une diode 246 dans le circuit collecteur du transistor 245 de telle manière qu'elle améliore la régulation.

Enfin, un filtre passe-bas réalisé par un circuit R–C formé des résistances 249, 250 et du condensateur 251 présente une grande constante de temps limitant la régulation pour les courants de sonnerie ce qui augmente le courant continu et alternatif pendant la sonnerie. Une telle caractéristique est très avantageuse car elle permet une saturation brutale du circuit qui se traduit aisément sur un diagramme des temps par des pics lors de la fermeture de la boucle. De plus, la résistance 254 permet de diminuer le courant de fuite. Quant à la diode Zéner 248, elle protège le transistor 245, le condensateur 247 et même le photocoupleur 240 contre les surtensions lorsque la boucle est ouverte.

Si SO est le signal de commande variant de +5 V à −5 V formé de niveaux logiques «1» (−5 V), lors d'une prise de ligne (en communication arrivée ou départ), le transistor 252 est saturé, ce qui active le phototransistor 240 et provoque la fermeture de la boucle. Le transistor 241 est saturé très violemment ce qui provoque des pointes de courant à l'établissement de la boucle. Ces pointes sont très avantageuses car elles permettent même en ligne longue d'être perçues aux niveaux des centraux publics les plus traditionnels, par exemple en déclenchant des relais. Une telle caractéristique du dispositif de l'invention est en particulier dûe à la présence du condensateur 247 qui se décharge à l'établissement de la boucle. La capacité du condensateur 247 empêche le potentiel de la base du transistor 243 de varier également à son potentiel émetteur ce qui confère au régulateur une grande impédance aux fréquences téléphoniques. Cette caractéristique de pointes est également obtenue grâce au circuit RC, de constante de temps convenablement choisie, qui produit un retard à la stabilisation du courant continu.

Le régulateur de courant de boucle qui vient d'être décrit présente une impédance infinie pour le courant continu, une impédance forte pour les courants à fréquence audio de façon à ce que l'impédance de la ligne dépende essentiellement du translateur et de ses circuits annexes (environ 600 Ω à 800 Hz). D'autre part, l'impédance du joncteur à 25 Hz et 50 Hz est assez faible pour que, pendant la sonnerie, à la prise de ligne, le courant continu superposé au courant de sonnerie soit suffisant pour permettre la détection, au niveau du central public, de la fermeture de boucle.

Dans la présente invention, chaque transistor pourrait être remplacé par tout moyen équivalent.

Le dispositif de l'invention est applicable aussi bien aux joncteurs deux fils-quatre fils qu'aux joncteurs deux fils.

## Revendications

1. Circuit de ligne pour joncteur de réseau comportant des moyens (240) interrupteurs de boucle permettant notamment la numérotation, des moyens de régulation (241, 242, 243) présentant une impédance élevée pour les fréquences téléphoniques et une impédance faible pour les courants de sonnerie, et comprenant deux transistors (241, 243) montés en Darlington, le premier transistor (241) étant placé en série avec une première résistance (242) dans ladite boucle, et des moyens (247) sont prévus pour stabiliser la tension de la base dudit second transistor (243) afin de relever l'impédance desdits moyens de régulation dans la bande téléphonique, caractérisé par le fait que lesdits moyens de régulation maintiennent le courant de ladite boucle autour d'un seuil prédéterminé, lesdits transistors (241, 243) de régulation sont du type NPN, ledit premier transistor (241) reçoit sur sa base l'impulsion de commande d'ouverture ou de fermeture de boucle, lesdits moyens de stabilisation comprennent une deuxième résistance (244), connectée entre la base dudit second transistor (243), et le collecteur dudit premier transistor, et un condensateur (247) connecté par sa première extrémité à la base dudit second transistor (243), des moyens de commande (245, 246) de ladite régulation comprennent un troisième transistor (245) dont la base est raccordée à l'émetteur dudit premier transistor (241) qui est connecté à la première extrémité de ladite première résistance et dont le collecteur est connecté à la base dudit second transistor (243), l'émetteur du troisième transistor étant relié à la deuxième extrémité de ladite première résistance (242) par l'intermédiaire d'une diode (246) agencée pour améliorer la régulation pour les faibles tensions, la deuxième extrémité dudit condensateur (247) étant connectée à la deuxième extrémité de ladite première résistance (242).

2. Circuit de ligne selon la revendication 1, caractérisé par le fait qu'on interpose entre la base dudit troisième transistor (245) et l'émetteur dudit premier transistor (241) un filtre passe-bas (249–251) à grande constante de temps pour limiter la régulation pour les courants de sonnerie.

3. Circuit de ligne selon la revendication 1, caractérisé par le fait qu'entre la base dudit second transistor (243) et ladite résistance (242) est disposée une diode Zéner (248) agencée pour limiter les surtensions en boucle ouverte.

4. Circuit de ligne selon l'une des revendications 1 à 3, caractérisé par le fait qu'un photocoupleur (240) est connecté entre la base du premier transistor (241) et l'émetteur du second transistor (243).

## Claims

1. Line circuit for network junctor comprising loop interrupting means (240) allowing namely dialling, regulating means (241, 242, 243), presenting a high impedance for the telephone frequencies and a low impedance for the ringing currents and comprising two transistors (241, 243) forming a Darlington assembly, the first transistor (241) being in series with a first resistor (242) within that loop, and means (247) being provided for stabilizing the base voltage of said second transistor (243) in order to raise the impedance of said regulating means in the telephone band, characterized in that said regulation means maintain said loop current about a predetermined threshold, said regulating transistors (241, 243) are of the NPC type, said first transistor (241) receives on its base a loop opening or closure control pulse, said stabilizing means include a second resistor (244), connected between the base of said second transistor (243), and the collector of said first transistor, and a capacitor (247) connected, with its first end, to the base of said second transistor (243), means (245, 246) for controlling said regulating means comprise a third transistor (245) whose base is connected to the emitter of said first transistor (241) which is connected to the first end of said first resistor and whose collector is connected to the base of said second transistor (243), the emitter of said third transistor being connected to the second end of said first resistor (242) via a diode (246) arranged to improve the regulation for the low voltages, the second end of said capacitor (247) being connected to the second end of said first resistor (242).

2. Circuit of claim 1, characterized in that a low pass filter (249–251) is interposed between the base of said third transistor (245) and the emitter of said first transistor (241), said low pass filter having a large time constant to limit the regulation for the ringing currents.

3. Circuit of claim 1, characterized in that a Zener diode (248) is disposed between the base of said second transistor (243) and said resistor (242) in order to limit the excess voltages in open loop.

4. Circuit of one claims 1 to 3, characterized in that a photocoupler (240) is connected between the base of the first transistor (241) and the emitter of the second transistor (243).

**Patentansprüche**

1. Verbindungssatz für eine Amtsleitungseinheit, mit Unterbrechermitteln (240) für eine Leitungsschleife, insbesondere um ein Wählen zu ermöglichen, mit Einstellmitteln (241, 242, 243), die eine erste höhere Impedanz für die Telefonfrequenzen und eine niedrigere Impedanz für die Klingelströme aufweisen und zwei Transistoren (241, 243) umfassen, die in Darlingtonschaltung vorgesehen sind, wobei der erste Transistor (241) in Reihe mit einem erster Widerstand (242) in der Leitungsschleife geschaltet ist, und mit Mitteln (247) zum Stabilisieren der Basisspannung des zweiten Transistors (243), um die Impedanz der Einstellmittel im Telefonband anzuheben, dadurch gekennzeichnet, dass die Einstellmittel die Ströme in der Leitungsschleife im Bereich einer vorbestimmten Schwelle halten, wobei die Transistoren (242, 243) der Einstellmittel NPN-Typen sind, wobei der erste Transistor (241) an seiner Basis den Kommandopuls zum Öffnen oder Schliessen der Schleife erhält, wobei die Stabilisierungsmittel einen zweiten Widerstand (244) umfassen, der zwischen der Basis des zweiten Transistors (243) und dem Kollektor des ersten Transistors angeordnet ist, sowie einen Kondensator (247), der mit seinem ersten Ende an der Basis des zweiten Transistors (243) liegt, wobei Ansteuermittel (245, 246) der Einstellmittel einen dritten Transistor (245) umfassen, dessen Basis mit dem Emitter des ersten Transistors (241) verbunden ist, der mit dem ersten Ende des ersten Widerstandes verbunden ist und dessen Kollektor mit der Basis des zweiten Transistors (243) verbunden ist, wobei der Emitter des dritten Transistors mit dem zweiten Ende des ersten Widerstandes (242) über eine zwischengeschaltete Diode (246) zur Verbesserung der Einstellung für niedrigere Spannungen versehen ist, wobei das zweite Ende des Kondensators (247) mit dem zweiten Ende des ersten Widerstandes (242) verbunden ist.

2. Verbindungssatz nach Anspruch 1, dadurch gekennzeichnet, dass zwischen der Basis des dritten Transistors (245) und dem Emitter des ersten Transistors (241) ein Tiefpassfilter (249–251) mit einer grossen Zeitkonstante vorgesehen ist, um die Einstellung für die Klingelströme zu begrenzen.

3. Verbindungssatz nach Anspruch 1, dadurch gekennzeichnet, dass zwischen der Basis des zweiten Transistors (243) und dem Widerstand (242) eine Zenerdiode (248) angeordnet ist, um Überspannung bei geöffneter Leitungsschleife zu begrenzen.

4. Verbindungssatz nach einem der Ansprüche 1 bis 3, dadurch gekennzeichnet, dass ein Optokoppler (240) zwischen die Basis des ersten Transistors (241) und den Emitter des zweiten Transistors (243) geschaltet ist.

FIG. 1

FIG. 2